# EUROPÄISCHE PATENTSCHRIFT

(11) **EP 3 387 296 B1**
(45) Veröffentlichungstag und Bekanntmachung des Hinweises auf die Patenterteilung: **11.12.2019**
(21) Anmeldenummer: 16779137.5
(22) Anmeldetag: 12.10.2016
(51) Int. Cl.: F16H 61/662, F16H 63/06

(54) **PNEUMATISCH VERSTELLBARES CVT-GETRIEBE SOWIE VERFAHREN ZUR VERSTELLUNG EINES CVT-GETRIEBES**
PNEUMATICALLY ADJUSTABLE CVT TRANSMISSION AND METHOD FOR ADJUSTING A CVT TRANSMISSION
TRANSMISSION CVT A RÉGLAGE PNEUMATIQE ET PROCÉDÉ DE RÉGLAGE D'UNE TRANSMISSION CVT

(30) Priorität: 10.12.2015 DE 102015224840
(43) Veröffentlichungstag der Anmeldung: 17.10.2018
(73) Patentinhaber: Robert Bosch GmbH, 70442 Stuttgart (DE)
(72) Erfinder: GERUNDT, Oliver, 71292 Friolzheim (DE); KRASTEV, Ianislav, 71638 Ludwigsburg (DE); SCHWARTZ, Daniel, 75447 Diefenbach (DE); DREWE, Ingo, 77815 Buehl (DE); EYDAM, Rudolf, 96129 Geisfeld (DE); DIEKMANN, Ralf, 71701 Schwieberdingen (DE); BREITINGER, Carolin, 71672 Marbach Am Neckar (DE); KLIMENKO, Michael, 70839 Gerlingen (DE)
(86) Internationale Anmeldenummer: PCT/EP2016/074454
(87) Internationale Veröffentlichungsnummer: WO 2017/097463

(56) Entgegenhaltungen:
- DE-A1- 4 132 516
- US-A- 4 573 948
- US-A1- 2003 221 890
- US-A1- 2005 113 202
- US-A1- 2013 092 468

## Beschreibung

### Stand der Technik

Die vorliegende Erfindung betrifft ein Verfahren zur Verstellung eines CVT-Getriebes mittels Pneumatik sowie ein pneumatisch verstellbares CVT-Getriebe, insbesondere für Kleinfahrzeuge wie Zweiräder, Dreiräder, Quads oder Schneemobile, sowie eine Brennkraftmaschine und ein Fahrzeug.

CVT-Getriebe sind aus dem Stand der Technik in unterschiedlichen Ausgestaltungen bekannt. Aufgrund des kontinuierlich variablen Getriebes können bei Fahrzeugen jeweils geeignete Übersetzungsverhältnisse im Vergleich mit Getrieben mit festgelegten Gängen erreicht werden. Ein besonderes Anwendungsgebiet derartiger CVT-Getriebe sind Kleinfahrzeuge, wie z.B. Zweiräder, Dreiräder (sogenannte Tucktucks), Schneemobile, Quads oder Scooter oder dergleichen. Bei derartigen CVT-Getrieben werden häufig Fliehkraftregler zur Verstellung einer Position eines Riemens an einem Kegelscheibenpaar verwendet. Abhängig von der Drehzahl verlagern Fliehkraftgewichte des Fliehkraftreglers dabei ihre radiale Position, wodurch ein axialer Abstand zwischen zwei Kegelscheiben verändert wird und dadurch eine Übersetzung des Getriebes verändert wird. Ein Nachteil derartiger Anordnungen ist jedoch, dass kein aktiv gesteuerter bzw. geregelter Eingriff in die Getriebeübersetzung des CVT-Getriebes möglich ist. Hierbei wäre es wünschenswert, eine einfache Möglichkeit zum gesteuerten bzw. geregelten Eingriff in eine Getriebeübersetzung von CVT-Getrieben zu haben, welche insbesondere bei Kleinfahrzeugen eingesetzt werden kann.

CVT-Getriebe aus dem Stand der Technik sind beispielsweise in der US 2013/092468 A oder der US 2003/221890 A (gemäß dem Oberbegriff des Anspruch 8) gezeigt.

### Offenbarung der Erfindung

Das erfindungsgemäße Verfahren zur Ansteuerung eines pneumatischen Aktuators eines CVT-Getriebes zur Änderung einer Übersetzung des CVT-Getriebes mit den Merkmalen des Anspruches 1 weist dem gegenüber den Vorteil auf, dass eine Wirkungsgradverbesserung des Antriebs möglich ist. Ferner können optimale Eigenschaften des Fahrzeugs bezüglich einer Fahrbarkeit und eines Verbrauchs des Fahrzeugs erreicht werden. Das erfindungsgemäße Verfahren ermöglicht eine einfache Ansteuerung des CVT-Getriebes und insbesondere eine schnelle Verstellung des CVT-Getriebes hinsichtlich einer vorgegebenen Solldrehzahl, welche auf einer Änderung einer Getriebeübersetzung des CVT-Getriebes basiert. Dies wird erfindungsgemäß dadurch erreicht, dass das Verfahren die Schritte des Bestimmens einer aktuellen Ist-Drehzahl einer Brennkraftmaschine und des Vergleichens der Ist-Drehzahl mit einer Soll-Drehzahl der Brennkraftmaschine umfasst. Die Soll-Drehzahl wird dabei in Abhängigkeit einer Fahrzeuggeschwindigkeit bestimmt. Wenn die Ist-Drehzahl kleiner ist als die Soll-Drehzahl, wird erfindungsgemäß der pneumatische Aktuator mit einer Unterdruckquelle verbunden. Wenn die Ist-Drehzahl größer als eine Soll-Drehzahl ist, wird der pneumatische Aktuator mit einer Druckquelle verbunden. Somit kann erfindungsgemäße eine pneumatische Verstellung des CVT-Getriebes, basierend auf einer von einer Steuereinheit vorgegebenen Soll-Drehzahl, ermöglicht werden.

Die Unteransprüche zeigen bevorzugte Weiterbildungen der Erfindung.

Vorzugsweise ist die Unterdruckquelle, mit welcher der pneumatische Aktuator verbindbar ist, ein Saugbereich einer Brennkraftmaschine. Dadurch kann auf einfache und kostengünstige Weise eine Unterdruckquelle bereitgestellt werden.

Weiter bevorzugt erfolgt eine Verbindung des pneumatischen Aktuators mit der Unterdruckquelle mittels eines ersten Ventils und/oder eine Verbindung des Aktuators mit einer Druckquelle erfolgt mittels eines zweiten Ventils. Die beiden Ventile sind vorzugsweise 2/2-Wegeventile.

Weiter bevorzugt wird das Verfahren derart ausgeführt, dass eine Hysterese, welche eine Verzögerung einer Änderung einer Übersetzung des CVT-Getriebes bewirkt, bei einem gleichen Wert für eine Übersetzung des CVT-Getriebes eine minimale Axialkraft des CVT-Getriebes auswählt und einstellt. Dadurch kann insbesondere eine Riemenspannung des CVT-Getriebes bei Wahl einer kleineren axialen Verstellkraft des CVT-Getriebes reduziert werden.

Weiter bevorzugt ist eine Steuereinheit vorgesehen, welche die Soll-Drehzahl der Brennkraftmaschine in Abhängigkeit eines optimalen Kraftstoffverbrauchs bestimmt. Dadurch kann eine Ansteuerung des pneumatischen Aktuators, basierend auf einer Zielgröße eines optimalen Kraftstoffverbrauchs durchgeführt werden. Dies ist insbesondere unter Umweltgesichtspunkten vorteilhaft.

Weiter bevorzugt bestimmt die Steuereinheit die Soll-Drehzahl der Brennkraftmaschine in Abhängigkeit eines optimalen Wirkungsgrades des CVT-Getriebes. Dadurch können Verluste im CVT-Getriebe minimiert werden.

Gemäß einer weiteren bevorzugten Ausgestaltung der vorliegenden Erfindung bestimmt die Steuereinheit die Soll-Drehzahl der Brennkraftmaschine in Abhängigkeit eines optimalen Drehmoments der Brennkraftmaschine.

Es sei ferner angemerkt, dass vorzugsweise die Steuereinheit die Soll-Drehzahl der Brennkraftmaschine in Abhängigkeit einer Kombination der vorherstehend genannten Stellgrößen bestimmt.

Ferner betrifft die vorliegende Erfindung ein CVT-Getriebe mit wenigstens einem Kegelscheibenpaar mit einer ersten und einer zweiten Kegelscheibe, sowie einem umlaufenden geschlossenen Umschlingungsmittel, insbesondere einem Riemen. Ferner umfasst das CVT-Getriebe einen pneumatischen Aktuator zur Verstellung eines axialen Abstands der ersten und zweiten Kegelscheibe, eine Unterdruckquelle und eine Druckquelle. Ein erstes Ventil ist vorgesehen, eine erste Verbindungsleitung zwischen dem pneumatischen Aktuator und der Unterdruckquelle freizugeben und zu verschließen. Ein zweites Ventil ist vorgesehen, welches in einer zweiten Verbindungsleitung zwischen dem pneumatischen Aktuator und der Druckquelle angeordnet ist, um eine Verbindung zwischen Aktuator und Druckquelle freizugeben und zu verschließen. Ferner ist eine Steuereinheit vorgesehen, welche eingerichtet ist, den Aktuator mit der Unterdruckquelle zu verbinden, wenn eine Ist-Drehzahl der Brennkraftmaschine kleiner als eine Soll-Drehzahl der Brennkraft ist. Die Steuereinheit ist ferner eingerichtet, den pneumatischen Aktuator mit der Druckquelle zu verbinden, wenn die Ist-Drehzahl der Brennkraftmaschine größer als die Soll-Drehzahl ist. Somit kann ein pneumatisch verstellbares CVT-Getriebe bereitgestellt werden, welches einen einfachen und kompakten Aufbau aufweist und durch aktive Einstellung eines Übersetzungsverhältnisses des CVT-Getriebes optimale Eigenschaften des Fahrzeugs bezüglich Fahrbarkeit und Verbrauch und dergleichen ermöglicht.

Das erfindungsgemäße CVT-Getriebe ist bevorzugt ferner derart vorgesehen, dass die Steuereinheit eingerichtet ist, bei einer Hysterese, welche eine verzögerte Änderung der Übersetzung des CVT-Getriebes ermöglicht, ein vorbestimmtes Übersetzungsverhältnis derart auszuwählen, dass eine minimale axiale Kraft zur Verstellung des CVT-Getriebes gewählt ist. Dadurch kann insbesondere eine schnelle und sichere Verstellung mittels relativ kleinen Pneumatikkräften ermöglicht werden.

Weiter bevorzugt entspricht ein Druck der Druckquelle dem Umgebungsdruck. Somit ist lediglich bevorzugt eine Verbindungsleitung zur Umgebungsluft vorzusehen, um eine Druckquelle zur Verstellung des pneumatischen Aktuators bereitzustellen.

Weiter bevorzugt ist als Unterdruckquelle ein Saugbereich der Brennkraftmaschine vorgesehen. Somit muss lediglich eine Verbindungsleitung zwischen dem pneumatischen Aktuator und dem Saugbereich der Brennkraftmaschine bereitgestellt werden, um eine Unterdruckquelle zu nutzen. Die Unterdruckquelle ist besonders bevorzugt ein Saugrohr der Brennkraftmaschine.

Weiter bevorzugt ist ein Unterdruckspeicher vorgesehen, welcher als Unterdruckquelle verwendet wird. Dadurch kann auch in Betriebssituationen der Brennkraftmaschine, in denen kein Unterdruck im Ansaugtrakt oder ein zu geringer Unterdruck vorliegt, eine Verstellung des pneumatischen Aktuators mittels des Unterdruckspeichers ermöglicht werden.

Besonders bevorzugt umfasst der pneumatische Aktuator einen durch einen Kolben unterteilten Aktuatorraum, wobei der Kolben mit einer der Kegelscheiben des Riemenrades verbunden ist. Eine Verbindung zwischen Kolben und Kegelscheibe erfolgt besonders bevorzugt über eine Stange.

Ferner betrifft die vorliegende Erfindung eine Brennkraftmaschine, umfassend ein erfindungsgemäßes CVT-Getriebe. Die Brennkraftmaschine umfasst vorzugsweise wenigstens einen oder zwei Zylinder und ein zum Zylinder führendes Saugrohr, wobei das Saugrohr mit dem pneumatischen Aktuator verbunden ist, um eine Unterdruckquelle für den pneumatischen Aktuator bereitzustellen.

Weiterhin betrifft die vorliegende Erfindung ein Fahrzeug, umfassend ein erfindungsgemäßes CVT-Getriebe und/oder eine erfindungsgemäße Brennkraftmaschine. Das Fahrzeug ist vorzugsweise ein Kleinfahrzeug mit einer Brennkraftmaschine mit einem Zylinder oder mit zwei Zylindern, wie z.B. ein Zweirad oder ein Dreirad oder ein Quad oder ein Schneemobil oder ein Scooter oder dergleichen.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Darstellung eines erfindungsgemäßen CVT-Getriebes,
- Figur 2: ein schematischer Ablaufplan des erfindungsgemäßen Verfahrens,
- Figur 3: ein Diagramm einer Getriebeübersetzung i über einer axialen Verstellkraft F mit Darstellung einer Hysterese, und
- Figur 4: ein Diagramm der Verstellkraft F des CVT-Getriebes und einer entsprechenden aktuellen Übersetzung i über der Zeit t.

### Bevorzugte Ausführungsformen der Erfindung

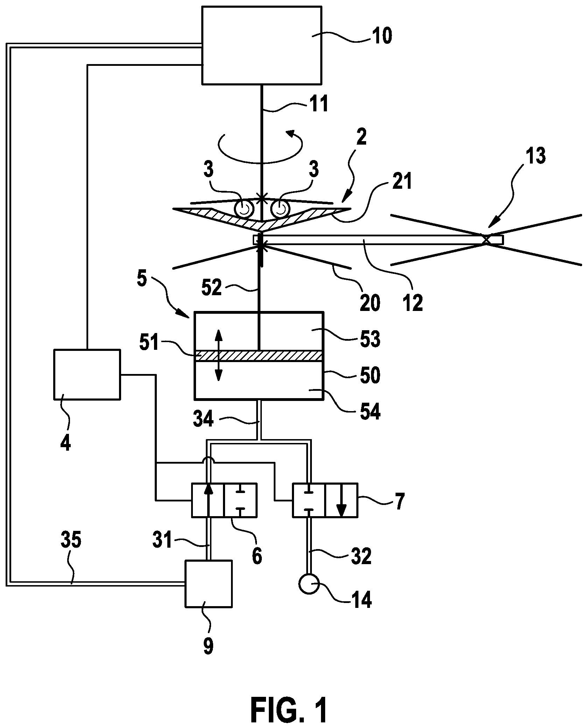

Nachfolgend wird unter Bezugnahme auf die Figuren 1 bis 4 ein erfindungsgemäßes CVT-Getriebe 1 sowie ein erfindungsgemäßes Verfahren im Detail beschrieben.

Wie aus Figur 1 ersichtlich ist, umfasst das CVT-Getriebe 1 ein Kegelscheibenpaar 2 mit einer ortsfesten Kegelscheibe 20 und einer axial beweglichen Kegelscheibe 21. Ein umlaufendes Umschlingungsmittel 12 verbindet das Kegelscheibenpaar 2 mit einem Abtriebselement 13. Das Abtriebselement 13 ist ebenfalls als Kegelscheibenpaar vorgesehen.

Am ersten Kegelscheibenpaar 2 sind Fliehkraftelemente 3 angeordnet, welche in Abhängigkeit einer auf sie wirkenden Fliehkraft radial nach außen gedrückt werden, wodurch automatisch eine Änderung eines Übersetzungsverhältnisses des CVT-Getriebes auftritt. Die Erfindung kann jedoch auch ohne Fliehkraftelemente ausgeführt werden.

Das Kegelscheibenpaar 2 ist dabei über eine Kurbelwelle 11 mit einer Brennkraftmaschine 10 verbunden.

Ferner ist erfindungsgemäß ein pneumatischer Aktuator 5 vorgesehen. Der pneumatische Aktuator 5 umfasst ein Aktuatorgehäuse 50, in welchem ein Kolben 51 angeordnet ist. Der Kolben 51 trennt den Innenraum des Aktuatorgehäuses 50 in einen ersten Raum 53 und einen zweiten Raum 54.

Ferner ist eine Steuereinheit 4 vorgesehen, welche mit der Brennkraftmaschine 10 sowie einem ersten Wegeventil 6 und einem zweiten Wegeventil 7 verbunden ist.

Das erste Wegeventil 6 ist in einer ersten Leitung 31 angeordnet und das zweite Wegeventil 7 ist in einer zweiten Leitung 32 angeordnet. Die erste und zweite Leitung 31, 32 werden zu einer Gemeinschaftsleitung 34 zusammengeführt, welche zum zweiten Raum 54 des Aktuators 5 führt.

Die erste Leitung 31 ist dabei mit einem Unterdruckspeicher 9 verbunden. Die zweite Leitung 32 ist mit der Umgebung 14 verbunden.

Der Unterdruckspeicher 9 ist über eine Unterdruckleitung 35 mit einem Ansaugbereich, genauer einem Saugrohr, der Brennkraftmaschine 10 verbunden.

Durch Schaltung der zwei Wegeventile 6, 7 kann die Steuereinheit 4 nun eine Position des Kolbens 51 im Aktuatorgehäuse 50 verändern. Durch die veränderte Position des Kolbens 51 wird über die Stange 52 auch die Position der axial beweglichen Kegelscheibe 21 verändert. Dadurch wird eine Getriebeübersetzung des CVT-Getriebes 1 geändert.

Die in Figur 1 gezeigte Stellung der Wegeventile 6, 7 ist dabei derart, dass der Unterdruckspeicher 9 über die erste Leitung 31 und das geöffnete erste Wegeventil 6 mit dem zweiten Raum 54 verbunden ist. Dadurch wird ein Unterdruck im zweiten Raum 54 erzeugt, so dass sich der Kolben 51 in Figur 1 nach unten bewegt.

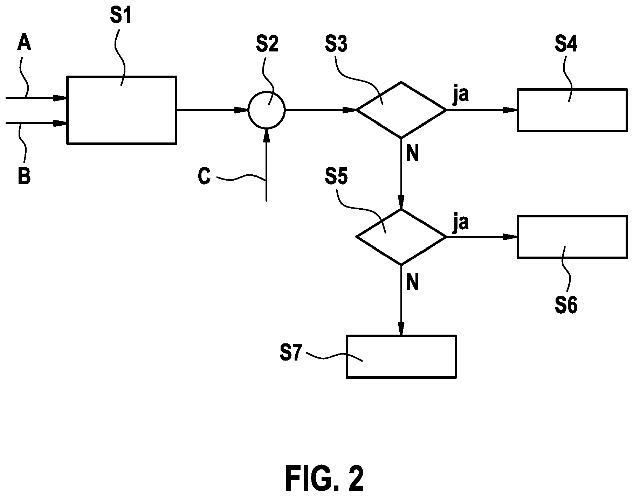

Die Steuereinheit 4 ist dabei eingerichtet, eine aktuelle Ist-Drehzahl der Brennkraftmaschine 10 zu erhalten. Ferner ist die Steuereinheit 4 eingerichtet, die Ist-Drehzahl mit einer Soll-Drehzahl zu vergleichen. Die Soll-Drehzahl wird durch die Steuereinheit 4 dabei in Abhängigkeit einer Fahrzeuggeschwindigkeit bestimmt. Dies ist in Figur 2 im Schritt S1 dargestellt, wobei mit dem Pfeil A die Übertragung der Fahrzeug-Geschwindigkeitswerte an die Steuereinheit dargestellt ist. Der Pfeil B zum Schritt S1 deutet dabei an, dass die Soll-Drehzahl auch abhängig von weiteren Werten der Brennkraftmaschine, z.B. einer Temperatur oder einem Drehmoment oder dergleichen, bestimmbar ist.

Im Schritt S2 erfolgt in der Steuereinheit 4 ein Vergleich der Soll-Drehzahl mit der Ist-Drehzahl. Die Ist-Drehzahl ist durch den Pfeil C angedeutet.

Wenn im Schritt S3 die Ist-Drehzahl kleiner als die Soll-Drehzahl ist, geht der Verfahrensablauf zum Schritt S4 über und die Steuereinheit verbindet den Aktuator 5 mit der Unterdruckquelle.

Im Fall von Nein N geht der Verfahrensablauf zum Schritt S5 weiter. In Schritt S5 wird überprüft, ob die Ist-Drehzahl größer als die Soll-Drehzahl der Brennkraftmaschine ist. Falls die Ist-Drehzahl größer als die Soll-Drehzahl ist, wird der Aktuator 5 mit der Druckquelle, in diesem Ausführungsbeispiel dem Umgebungsdruck 14, verbunden. Dies ist in Figur 2 durch den Schritt S6 angedeutet.

Wenn die Ist-Drehzahl weder größer noch kleiner als die Soll-Drehzahl ist, sondern gleich der Soll-Drehzahl, geht der Verfahrensablauf zum Schritt S7 über, wobei die Steuereinheit 4 im Schritt S7 das erste und zweite Wegeventil 6, 7 im unveränderten Zustand belässt.

Somit kann mittels des erfindungsgemäßen Verfahrens eine Ansteuerung des Aktuators 5 derart erfolgen, dass eine Wirkungsgradverbesserung des CVT-Getriebes 1 erreicht wird. Ferner können optimale Eigenschaften des Fahrzeugs bezüglich Fahrbarkeit und Verbrauch erreicht werden.

Erfindungsgemäß können dabei kostengünstige Wegeventile verwendet werden. In diesem Ausführungsbeispiel werden 2/2-Wegeventile verwendet. Alternativ kann auch ein 3/3-Wegeventil verwendet werden.

Es sei ferner angemerkt, dass das erfindungsgemäße Verfahren derart ausgeführt wird, dass die Steuereinheit 4 einen Ansteuerimpuls an das erste Wegeventil 6 oder das zweite Wegeventil 7 entsprechend den Abfragen in den Schritten S3 und S5 abgibt, welche das jeweilige Wegeventil so lange öffnet, bis sich die aktuelle Ist-Drehzahl der gewünschten Soll-Drehzahl annähert. Dabei wird die Dauer des Öffnungsimpulses für die Wegeventile, basierend auf dem absoluten Wert der Abweichung zwischen Ist-Drehzahl und Soll-Drehzahl berechnet. Dies wird periodisch so lange wiederholt, bis eine Regelabweichung voll abgebaut ist.

Es sei ferner angemerkt, dass das erfindungsgemäße Verfahren auch dazu verwendet werden kann, um eine Riemenspannung des umlaufend geschlossenen Umschlingungsmittels 12 zu verbessern und dadurch insbesondere einen Wirkungsgrad des CVT-Getriebes zu verbessern.

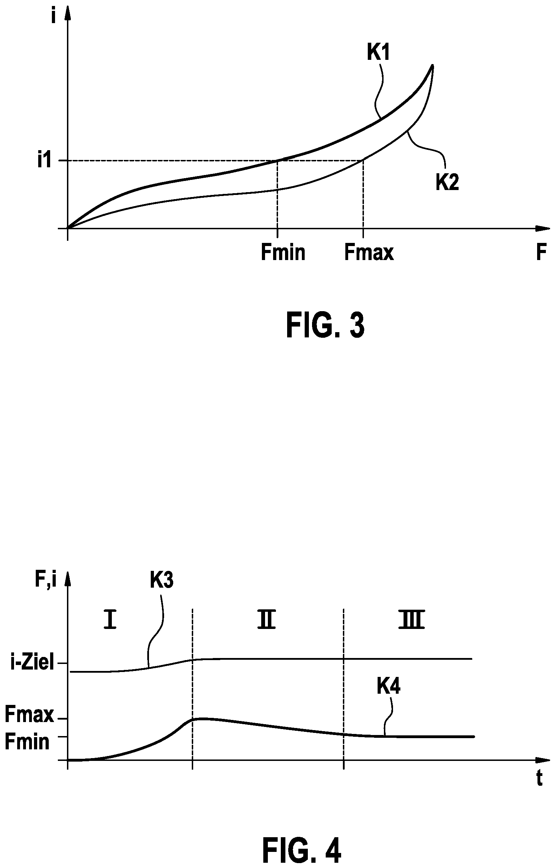

Bedingt durch die mechanischen Eigenschaften des CVT-Getriebes, insbesondere einer Elastizität des Umschlingungsmittels sowie von Reibkräften, ergibt sich bei den CVT-Getrieben eine Hysterese, welche eine verzögerte Änderung der Übersetzung bewirkt. Das Diagramm in Figur 3 zeigt die Abhängigkeit der Übersetzung i über der Axialkraft F, welche zur Verstellung der axial beweglichen Kegelscheibe 21 notwendig ist. Die erste Kurve K1 zeigt dabei die normale Abhängigkeit und die zweite Kurve K2 die Hysteresekurve mit verzögerter Änderung der Übersetzung.

Wie aus dem Diagramm von Figur 3 ersichtlich ist, kann das Auftreten der Hysterese nun dazu verwendet werden, dass eine gleiche Übersetzung i1 bei unterschiedlichen axialen Anpresskräften Fmin oder Fmax eingehalten werden kann. Das erfindungsgemäße Verfahren kann nun derart verwendet werden, dass die Kraft Fmin eingestellt wird, ohne dass es hierzu zu Änderungen des Übersetzungsverhältnisses i1 kommt.

Der Ablauf dieses in Figur 3 gezeigten Verfahrens ist in Figur 4 dargestellt, welche eine Zielübersetzung i-Ziel und eine Axialkraft F über der Zeit t zeigt. Die Kurve K3 zeigt dabei die aktuelle Übersetzung und die Kurve K4 zeigt die Axialkraft F (Anpresskraft). Hierbei sind drei Phasen im Diagramm von Figur 4 eingezeichnet. In der ersten Phase I verstellt der pneumatische Aktuator 5 die neue Übersetzung i-Ziel zur Kompensation der Regelabweichung, falls die Regelabweichung der Motordrehzahl größer ist als ein Schwellenwert. Hierbei steigt die Aktuierungskraft (Kurve K4 ist ansteigend). In der Phase II wird die Aktuierungskraft mit einer langsamen Rampe reduziert. In der Phase III würde, falls die Aktuierungskraft den Schwellenwert Fmin erreicht hat, die weitere Reduzierung der Aktuierungskraft die aktuelle Übersetzung i verändern. Diese Veränderung wird erfasst und die Aktuierungskraft wird nicht mehr reduziert. Dadurch bleibt eine Riemenspannung weiterhin auf einem optimalen Niveau.

Somit kann mittels der erfindungsgemäßen Vorrichtung und dem erfindungsgemäßen Verfahren eine signifikante Wirkungsgradverbesserung von CVT-Getrieben erreicht werden. Dabei können in Abhängigkeit von verschiedenen Parametern einer Brennkraftmaschine entsprechende Anpassungen der Getriebeübersetzung des CVT-Getriebes durchgeführt werden. Dabei ist der erfindungsgemäße Aufbau und die erfindungsgemäße Ansteuerung sehr einfach und robust.

## Patentansprüche

1. Verfahren zur Ansteuerung eines pneumatischen Aktuators (5) eines CVT-Getriebes (1) zur Änderung einer Übersetzung des CVT-Getriebes, umfassend die Schritte:
- Bestimmung einer aktuellen Ist-Drehzahl einer Brennkraftmaschine (10),
- Vergleichen der aktuellen Ist-Drehzahl mit einer Soll-Drehzahl der Brennkraftmaschine, wobei die Soll-Drehzahl in Abhängigkeit einer Fahrzeuggeschwindigkeit bestimmt ist,
- wobei, wenn die Ist-Drehzahl kleiner als die Soll-Drehzahl ist, der Aktuator (5) mit einer Unterdruckquelle (9) verbunden wird und
- wobei, wenn die Ist-Drehzahl größer als die Soll-Drehzahl ist, der Aktuator (5) mit einer Druckquelle (14) verbunden wird.

2. Verfahren nach Anspruch 1, **dadurch gekennzeichnet, dass** die Unterdruckquelle ein Saugbereich einer Brennkraftmaschine (10) ist.

3. Verfahren nach einem der vorhergehenden Ansprüche, **dadurch gekennzeichnet, dass** eine Verbindung des Aktuators (5) mit der Unterdruckquelle (9) durch Schalten eines Ventils erfolgt und/oder dass eine Verbindung des Aktuators (5) mit einer Druckquelle (14) durch Schalten eines Ventils erfolgt.

4. Verfahren nach einem der vorhergehenden Ansprüche, **gekennzeichnet durch** eine Hysterese, welche ein verzögertes Ändern einer Übersetzung bewirkt, wobei bei einem gleichen Übersetzungsverhältnis eine minimale Axialkraft (F) des CVT-Getriebes eingestellt wird.

5. Verfahren nach einem der vorhergehenden Ansprüche, **gekennzeichnet durch** eine Steuereinheit (4), welche die Soll-Drehzahl der Brennkraftmaschine in Abhängigkeit eines optimalen Kraftstoffverbrauchs bestimmt.

6. Verfahren nach einem der vorherigen Ansprüche, **dadurch gekennzeichnet, dass** die Steuereinheit die Soll-Drehzahl der Brennkraftmaschine in Abhängigkeit eines optimalen Wirkungsgrades des CVT-Getriebes (1) bestimmt.

7. Verfahren nach einem der vorherigen Ansprüche, **dadurch gekennzeichnet, dass** die Steuereinheit die Soll-Drehzahl der Brennkraftmaschine in Abhängigkeit eines optimalen Drehmoments der Brennkraftmaschine bestimmt.

8. CVT-Getriebe, umfassend
- ein Kegelscheibenpaar (2) mit einer ersten ortsfesten Kegelscheibe (20) und einer zweiten axial beweglichen Kegelscheibe (21),
- ein umlaufend geschlossenes Umschlingungsmittel (12),
- einen pneumatischen Aktuator (5) zur Verstellung eines Abstands zwischen der ersten Kegelscheibe (20) und der zweiten Kegelscheibe (21),
- eine Unterdruckquelle (9),
**dadurch gekennzeichnet, dass** das CVT-Getriebe weiterhin umfasst:
- eine Druckquelle (14),
- ein erstes Ventil (6), welches in einer ersten Leitung (31) angeordnet ist, welche den pneumatischen Aktuator (5) mit der Unterdruckquelle (9) verbindet,
- ein zweites Ventil (7), welches in einer zweiten Leitung (32) angeordnet ist, welche den pneumatischen Aktuator (5) mit der Druckquelle (14) verbindet, und
- eine Steuereinheit (4), welche eingerichtet ist, den pneumatischen Aktuator (5) mit der Unterdruckquelle (9) zu verbinden, wenn eine Ist-Drehzahl der Brennkraftmaschine kleiner als eine Soll-Drehzahl der Brennkraftmaschine ist, und
- den pneumatischen Aktuator (5) mit der Druckquelle (14) verbindet, wenn die Ist-Drehzahl der Brennkraftmaschine größer als die Soll-Drehzahl ist.

9. Getriebe nach Anspruch 8, **dadurch gekennzeichnet, dass** die Steuereinheit (4) eingerichtet ist, bei einer Hysterese, welche eine verzögerte Änderung der Übersetzung ermöglicht, ein vorbestimmtes Übersetzungsverhältnis derart auszuwählen, dass eine minimale Axialkraft (F) zur Verstellung des CVT-Getriebes notwendig ist.

10. Getriebe nach Anspruch 8 oder 9, **dadurch gekennzeichnet, dass** ein Druck der Druckquelle (14) dem Umgebungsdruck entspricht.

11. Getriebe nach einem der Ansprüche 8 bis 10, **gekennzeichnet durch** einen Unterdruckspeicher, welcher mit einem Ansaugtrakt der Brennkraftmaschine (10) verbunden ist.

12. Getriebe nach einem der Ansprüche 8 bis 11, **dadurch gekennzeichnet, dass** der pneumatische Aktuator einen durch einen Kolben (51) unterteilten Innenraum eines Aktuatorgehäuses (50) umfasst, wobei der Kolben (51) mit der axial beweglichen Kegelscheibe (21) verbunden ist.

## Claims

1. Method for controlling a pneumatic actuator (5) of a continuously variable transmission (CVT) (1) in order to change a transmission ratio of the CVT, comprising the following steps:
- determining a current actual speed of an internal combustion engine (10),
- comparing the current actual speed with a setpoint speed of the internal combustion engine, wherein the setpoint speed is determined in accordance with a vehicle speed,
- wherein, if the actual speed is lower than the setpoint speed, the actuator (5) is connected to a vacuum source (9), and
- wherein, if the actual speed is higher than the setpoint speed, the actuator (5) is connected to a pressure source (14).

2. Method according to Claim 1, **characterized in that** the vacuum source is an intake region of an internal combustion engine (10).

3. Method according to one of the preceding claims, **characterized in that** the actuator (5) is connected to the vacuum source (9) by switching a valve and/or **in that** the actuator (5) is connected to a pressure source (14) by switching a valve.

4. Method according to one of the preceding claims, **characterized by** a hysteresis, which causes delayed changing of a transmission ratio, wherein, while the transmission ratio stays the same, a minimum axial force (F) of the CVT is set.

5. Method according to one of the preceding claims, **characterized by** a control unit (4), which determines the setpoint speed of the internal combustion engine in accordance with an optimum fuel consumption.

6. Method according to one of the preceding claims, **characterized in that** the control unit determines the setpoint speed of the internal combustion engine in accordance with an optimum efficiency of the CVT (1).

7. Method according to one of the preceding claims, **characterized in that** the control unit determines the setpoint speed of the internal combustion engine in accordance with an optimum torque of the internal combustion engine.

8. CVT, comprising
- a conical disc pair (2) having a first, fixed conical disc (20) and a second, axially movable conical disc (21),
- a continuous wrap-around means (12),
- a pneumatic actuator (5) for adjusting a distance between the first conical disc (20) and the second conical disc (21),
- a vacuum source (9),
**characterized in that** the CVT further comprises:
- a pressure source (14),
- a first valve (6), which is arranged in a first line (31) and which connects the pneumatic actuator (5) to the vacuum source (9),
- a second valve (7), which is arranged in a second line (32) and which connects the pneumatic actuator (5) to the pressure source (14), and
- a control unit (4), which is designed to connect the pneumatic actuator (5) to the vacuum source (9) when an actual speed of the internal combustion engine is lower than a setpoint speed of the internal combustion engine, and
- connects the pneumatic actuator (5) to the pressure source (14) when the actual speed of the internal combustion engine is higher than the setpoint speed.

9. Transmission according to Claim 8, **characterized in that** the control unit (4) is designed, in the case of a hysteresis, which allows a delayed change in the transmission ratio, to select a predetermined transmission ratio in such a way that a minimum axial force (F) is required to adjust the CVT.

10. Transmission according to Claim 8 or 9, **characterized in that** a pressure of the pressure source (14) corresponds to the ambient pressure.

11. Transmission according to one of Claims 8 to 10, **characterized by** a vacuum accumulator, which is connected to an intake tract of the internal combustion engine (10).

12. Transmission according to one of Claims 8 to 11, **characterized in that** the pneumatic actuator comprises an interior of an actuator housing (50), which interior is subdivided by a piston (51), wherein the piston (51) is connected to the axially movable conical disc (21).

## Revendications

1. Procédé de commande d'un actionneur pneumatique (5) d'une transmission CVT (1) permettant de modifier un rapport de transmission de la transmission CVT, comprenant les étapes suivantes :
- la détermination d'une vitesse de rotation effective instantanée d'un moteur à combustion interne (10),
- la comparaison de la vitesse de rotation effective instantanée à une vitesse de rotation théorique du moteur à combustion interne, dans lequel la vitesse de rotation théorique est déterminée en fonction d'une vitesse du véhicule,
- dans lequel, si la vitesse de rotation effective est inférieure à la vitesse de rotation théorique, l'actionneur (5) est raccordé à une source de dépression (9) et
- dans lequel, si la vitesse de rotation effective est supérieure à la vitesse de rotation théorique, l'actionneur (5) est raccordé à une source de pression (14) .

2. Procédé selon la revendication 1, **caractérisé en ce que** la source de dépression est une zone d'aspiration d'un moteur à combustion interne (10).

3. Procédé selon l'une des revendications précédentes, **caractérisé en ce qu'**un raccordement de l'actionneur (5) à la source de dépression (9) est effectué par commutation d'une vanne et/ou **en ce qu'**un raccordement de l'actionneur (5) à une source de pression (14) est effectuée par commutation d'une vanne.

4. Procédé selon l'une des revendications précédentes, **caractérisé par** une hystérésis qui provoque une modification retardée d'un rapport de transmission, dans lequel, dans le cas où le rapport de transmission est inchangé, la force axiale (F) de la transmission CVT est réglée à une valeur minimale.

5. Procédé selon l'une des revendications précédentes, **caractérisé par** une unité de commande (4) qui détermine la vitesse de rotation théorique du moteur à combustion interne en fonction d'une consommation de carburant optimale.

6. Procédé selon l'une des revendications précédentes, **caractérisé en ce que** l'unité de commande détermine la vitesse de rotation théorique du moteur à combustion interne en fonction d'un rendement optimal de la transmission CVT (1).

7. Procédé selon l'une des revendications précédentes, **caractérisé en ce que** l'unité de commande détermine la vitesse de rotation théorique du moteur à combustion interne en fonction d'un couple optimal du moteur à combustion interne.

8. Transmission CVT comprenant
- une paire de disques coniques (2) comportant un premier disque conique (20) fixe et un second disque conique (21) mobile axialement,
- un moyen d'enroulement fermé à déplacement circonférentiel (12),
- un actionneur pneumatique (5) permettant de régler une distance entre le premier disque conique (20) et le second disque conique (21),
- une source de dépression (9),
**caractérisé en ce que** la transmission CVT comprend en outre :
- une source de pression (14),
- une première vanne (6), qui est disposée dans un premier conduit (31) reliant l'actionneur pneumatique (5) à la source de dépression (9),
- une seconde vanne (7), qui est disposée dans un second conduit (32) reliant l'actionneur pneumatique (5) à la source de pression (14), et
- une unité de commande (4) qui est conçue pour raccorder l'actionneur pneumatique (5) à la source de dépression (9) si une vitesse de rotation effective du moteur à combustion interne est inférieure à une vitesse de rotation théorique du moteur à combustion interne, et
- raccorde l'actionneur pneumatique (5) à la source de pression (14) si la vitesse de rotation effective du moteur à combustion interne est supérieure à la vitesse de rotation théorique.

9. Transmission selon la revendication 8, **caractérisée en ce que** l'unité de commande (4) est conçue pour sélectionner un rapport de transmission prédéterminé dans le cas d'une hystérésis qui permet une modification retardée du rapport de transmission, de manière à ce qu'une force axiale (F) minimale soit nécessaire pour ajuster la transmission CVT.

10. Transmission selon la revendication 8 ou 9, **caractérisée en ce qu'**une pression de la source de pression (14) correspond à la pression ambiante.

11. Transmission selon l'une des revendications 8 à 10, **caractérisée par** un accumulateur de dépression qui est raccordé à un conduit d'aspiration du moteur à combustion interne (10).

12. Transmission selon l'une des revendications 8 à 11, **caractérisée en ce que** l'actionneur pneumatique comprend un espace intérieur d'un boîtier d'actionneur (50) divisé par un piston (51), dans lequel le piston (51) est relié au disque conique (21) mobile axialement.
